# EUROPÄISCHE PATENTSCHRIFT

(11) **EP 1 621 788 B1**
(45) Veröffentlichungstag und Bekanntmachung des Hinweises auf die Patenterteilung: **10.09.2008**
(21) Anmeldenummer: 05405457.2
(22) Anmeldetag: 28.07.2005
(51) Int. Cl.: F16D 41/00, F16D 41/28, B60B 27/02, B60B 27/00

(54) **Freilaufnabe**
Free-wheeling hub
Moyeu de roue libre

(30) Priorität: 28.07.2004 CH 12682004
(43) Veröffentlichungstag der Anmeldung: 01.02.2006
(73) Patentinhaber: Frei, Rudolf, 8589 Sitterdorf (CH)
(72) Erfinder: Frei, Rudolf, 8589 Sitterdorf (CH)
(74) Vertreter: Kulhavy, Sava

(56) Entgegenhaltungen:
- DE-A1- 2 542 640
- US-A- 2 211 548
- US-A1- 2004 045 783

## Beschreibung

Die vorliegende Erfindung betrifft eine Freilaufnabe, insbesondere für ein Fahrrad, mit einer Nabenhülse, an welcher Speichen eines Rades einerends anschliessbar sind und in welcher eine Hülse eingepresst ist, mit einer Antriebseinrichtung, welche einen hülsenförmigen Gewindekopf für die Aufnahme eines Zahnkranzes besitzt, und mit einer Kopplungsglieder aufweisenden Freilaufvorrichtung, welche der Nabenhülse sowie der Antriebseinrichtung zugeordnet ist und einen Steuerabschnitt aufweist, wobei die Freilaufvorrichtung so ausgeführt ist, dass die Kopplungsglieder nur während der Dauer der gewünschten antriebsmässigen Verbindung zwischen der Nabenhülse und Antriebseinrichtung antreibbar sind.

Eine solche Freilaufnabe ist beispielsweise in DE-A-25 42 640 offenbart Der Zweck der Konstruktion dieser Nabe ist, eine Freilaufnabe für Fahrräder zu schaffen, welche sich kostengünstig herstellen lässt.

Die Aufgabe der vorliegenden Erfindung ist, die Nachteile des Standes der Technik zu beseitigen.

Diese Aufgabe wird bei der Freilaufnabe der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einem vertikalen Schnitt eine erste Ausführung der vorliegenden Freilaufnabe mit einer Freilaufvorrichtung,
Fig. 2 in explodierter Darstellung die Freilaufvorrichtung der Freilaufnabe gemäss Fig. 1,
Fig. 3 vergrössert einen Ausschnitt aus Fig. 1, welcher die Freilaufvorrichtung gemäss Fig. 2 in einem vertikalen Schnitt zeigt,
Fig. 4 vergrössert einen Ausschnitt aus einem Schnitt durch die Freilaufvorrichtung aus Fig. 3, wobei dieser Schnitt senkrecht zur Achse C der Freilaufvorrichtung geführt ist,
Fig. 5 einen vertikalen Schnitt senkrecht zur Längsachse C durch die Freilaufvorrichtung aus Fig. 4, wenn sich diese im Freilaufzustand befindet,
Fig. 6 einen vertikalen Schnitt senkrecht zur Längsachse C der Freilaufvorrichtung aus Fig. 4, wenn sich diese im Antriebszustand befindet,
Fig. 7 vergrössert einen Ausschnitt aus Fig. 1, welcher eine weitere Ausführungsmöglichkeit der Freilaufvorrichtung gemäss Fig. 2 in einem vertikalen Schnitt zeigt,
Fig. 8 perspektivisch eine Kupplungsvorrichtung der Freilaufvorrichtung gemäss Fig. 7,
Fig. 9 in einer Draufsicht die Kupplungsvorrichtung aus Fig. 8 und
Fig. 10 in einem vertikalen Schnitt eine zweite Ausführung der vorliegenden Freilaufnabe.

Die vorliegende Freilaufnabe umfasst eine an sich bekannte Nabenhülse 1, an welcher ebenfalls an sich bekannte Tüllen 2 angeformt sind. An diese Tüllen 2 können die Speichen eines der Räder eines Fahrrades einerends angeschlossen sein. Durch diese Nabenhülse 1 geht eine an sich bekannte Achse 3 hindurch, welche anhand ebenfalls an sich bekannter Mittel in der Gabel eines Fahrrades befestigt sein kann. Die Nabenhülse 1 ist im dargestellten Beispiel mittels eines Wälzlagers 4 auf der Achse 3 drehbar gelagert.

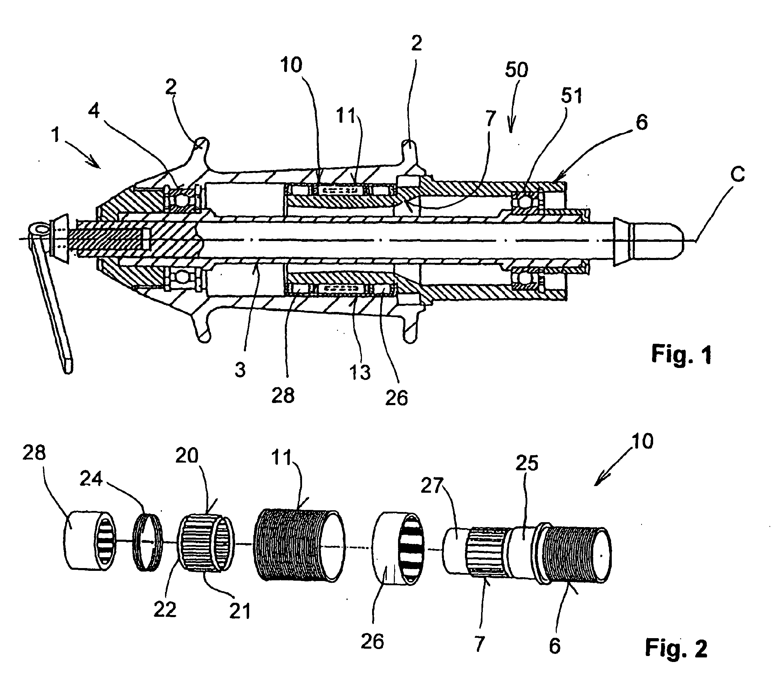

Die Freilaufnabe umfasst ferner eine Antriebseinrichtung 50, welche auf der Achse 3 ebenfalls drehbar gelagert ist. Diese Antriebseinrichtung 50 weist einen ersten Abschnitt 6 auf, welcher auch als Gewindekopf bezeichnet werden kann. Dieser Gewindekopf 6 ist in einer an sich bekannten Weise zur Aufnahme eines Zahnrades (nicht dargestellt) bestimmt und ausgeführt, welches über eine Kette an die Pedale eines Fahrrads angeschlossen ist. Zwischen dem Gewindekopf 6 und der Achse 3 befindet sich im in Fig. 1 dargestellten Beispiel ein Wälzlager 51, welches zur Lagerung des Gewindekopfes 6 auf der Achse 3 bestimmt ist.

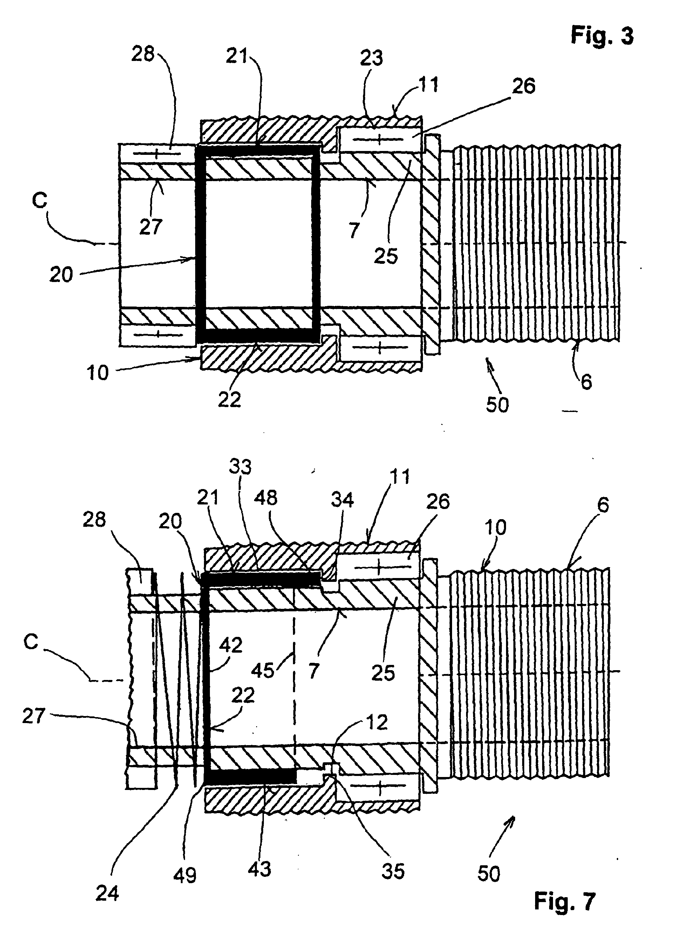

Die Freilaufnabe weist ferner eine Freilaufvorrichtung 10 auf. Diese Freilaufvorrichtung 10 umfasst einen im wesentlichen hülsenförmigen Abschnitt 7, welcher auch als Steuerabschnitt bezeichnet werden kann. Dieser Steuerabschnitt 7 ist an den Gewindekopf 6 der Antriebseinrichtung 50 einerends angeschlossen, wobei die Achsen des Gewindekopfes 6 und des Steuerabschnittes 7 auf einer gemeinsamen Achse C liegen. Im in Fig. 1 dargestellten Fall bilden der Gewindekopf 6 und der Steuerabschnitt 7 ein Stück. Gesehen in der Richtung der Längsachse C der vorliegenden Freilaufnabe befindet sich eine Hülse 25 (Fig. 2 und 3) zwischen der Steuerhülse 7 und dem Gewindekopf 6. Die Steuerhülse 7, die soeben genannte Hülse 25 und der Gewindekopf 6 bilden im in Fig. 1 dargestellten Fall ein Stück. Auf der Hülse 25 ist ein erstes Antriebslager 26 angebracht und deswegen wird diese Hülse 25 im Nachstehenden auch als Aufnahmehülse 25 genannt.

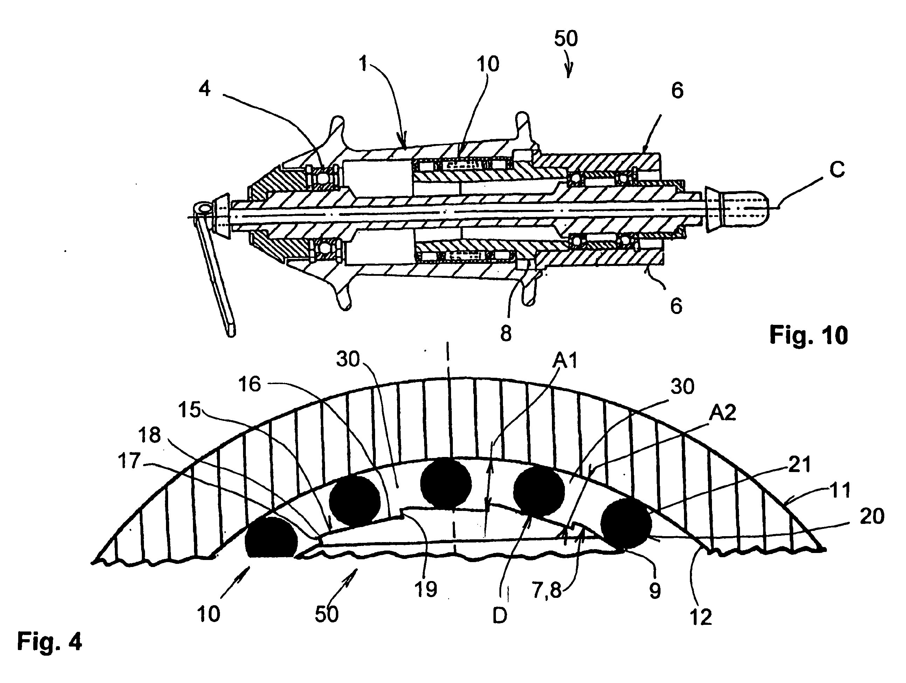

Im in Fig. 10 dargestellten Ausführungsbeispiel der vorliegenden Freilaufnabe stellt der Steuerabschnitt 8 eine gesonderte Hülse dar, welche mit dem Gewindekopf 6 in Verbindung bzw. in Eingriff steht. Auch wegen dieser zweiten Ausführung des Steuerabschnittes der Antriebsvorrichtung 50 wird der Steuerabschnitt im Nachstehenden auch als Steuerhülse 7 bzw. 8 bezeichnet werden. Diese Steuerhülse 7 bzw. 8 ist so ausgeführt, dass sie im Inneren der Nabenhülse 1 liegt, sodass sich die Nabenhülse 1 und der Steuerabschnitt 7 bzw. 8 in einem Bereich 13 überlappen. Die Steuerhülse 7 bzw. 8 dient zur Steuerung der Funktion der Freilaufnabe.

Zur Freilaufvorrichtung 10 gehört ferner eine weitere Hülse 11, welche in die Nabenhülse 1 so eingepresst ist, dass sie in der Nabenhülse 1 undrehbar festsitzt. Deswegen wird diese weitere Hülse 11 hier im weiteren auch Presshülse genannt. Diese Presshülse 11 befindet sich im Ueberlappungsbereich 13 der Nabenhülse 1 und des Steuerabschnittes 7 bzw. 8. Der Steuerabschnitt 7 bzw. 8 ist von der Presshülse 11 daher umgeben. Die Innenwand 12 (Fig. 4) der Presshülse 11 ist glatt und sie hat die Form des Mantels eines Zylinders.

In jener Endpartie der Presshülse 11, welche zum Gewindekopf 6 zugewandt liegt, ist ein umlaufender Absatz 23 (Fig. 3) in der Innenwand der Presshülse 11 ausgeführt. Das auf der Aufnahmehülse 25 angebrachte Antriebslager 26 kommt in diesen inneren umlaufenden Absatz 23 zu liegen. An das gegenüberliegende, freie Ende der Steuerhülse 7 bzw. 8 ist das eine Ende einer zweiten Hülse 27 zur Aufnahme eines zweiten Antriebslagers 28 (Fig. 2) angeschlossen. Diese zweite Aufnahmehülse 27 ist mit der Antriebshülse 7 bzw. 8 einstückig. Das zweite Antriebs- bzw. Wälzlager 28 ist in der Nabenhülse 1 eingefasst. Die Nabenhülse 1 und die Antriebseinrichtung 50 bilden in dieser Weise ein knickfreies und über die Lager 4 und 51 auf der Achse 3 drehbar gelagertes Gefüge, obwohl die Antriebseinrichtung 50 von der Nabenhülse 1 unabhängig drehen kann.

Auf der im wesentlichen zylinderförmigen Aussenwand 9 des Steuerabschnittes 7 bzw. 8 sind Zähne 15 (Fig. 4) ausgeführt, welche von der zylinderförmigen Oberfläche 9 der Steuerhülse 7 bzw. 8 im wesentlichen radial abstehen. Der jeweilige Zahn 15 erstreckt sich parallel zur Längsachse C. Solche Zähne 15 sind über den gesamten Umfang der Aussenfläche 9 der Steuerhülse 7 bzw. 8 verteilt, und zwar zweckmässigerweise in gleich grossen Abständen voneinander. Es kann jedoch zweckmässig sein, dass die Abstände zwischen zwei benachbarten Zähnen 15 von einem Zahnpaar zu einem anderen Zahnpaar unterschiedlich sind. Ferner kann es zweckmässig sein, dass bestimmte der Zähne 15 eine andere Höhe habe als andere Zähne.

Im Querschnitt hat der jeweilige Zahn 15 im wesentlichen die Form eines Sägezahnes mit einer langsam ansteigenden Flanke 16 und mit einer steilen Flanke 17 (Fig. 4). Im dargestellten Fall weist die langsam ansteigende Flanke 16 einen linearen bzw. geradlinigen Verlauf auf. Dort, wo sich die Flanken 16 und 17 des Zahnes 15 treffen, ist eine Stirnkante 18 des Zahnes 15 vorhanden. Der Abstand A1 dieser Zahnkante 18 von der Innenfläche 12 der Presshülse 11 ist kleiner als der Abstand A2 zwischen dem Boden 19 des Zahnes 15 und der Innenfläche 12 der Presshülse 11. Der Boden 19 eines Zahnes 15 liegt dort, wo das untere Ende der langsam ansteigenden Flanke 16 auf das untere Ende der steilen Flanke 17 trifft.

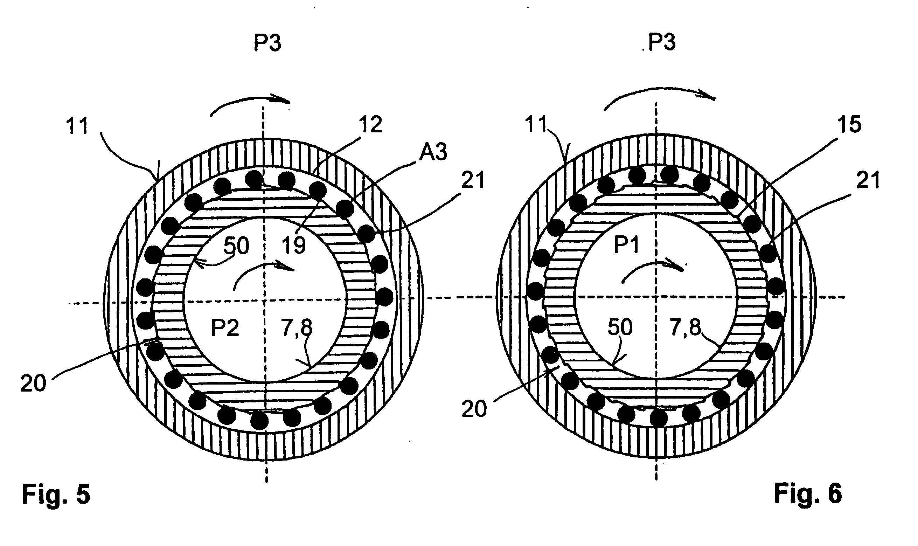

Jener Abschnitt der Umfangsfläche 9 der Steuerhülse 7 bzw. 8, welcher sich zwischen dem Boden 19 und der Kante 18 eines der Zähne 15 erstreckt, stellt zusammen mit dem gegenüber liegenden Abschnitt der glatten Oberfläche 12 der Presshülse 11 einen sich verjüngenden Spalt 30 dar. In diesem Spalt 30 befindet sich je eine der Nadeln 21 einer Kupplungsvorrichtung 20 (Fig. 2). Der Durchmesser D der Nadel 21 (Fig. 4) ist grösser als A1 und etwas kleiner als A2. Die Folge davon ist, dass sich die Nadel 21, wenn die Nabe im Freilauf arbeitet, im Bereich des Zahnbodens 19 befindet (Fig. 5). Wenn dagegen die Nabenhülse 1 über die Antriebseinrichtung 50 angetrieben wird, dann verstellt der Gewindekopf 6 die Steuerhülse 7 bzw 8 hinsichtlich der Presshülse 11 in Richtung des Pfeiles P1 (Fig. 6). Hierbei bewegen sich die Nadeln 21 im sich verjüngenden Spalten 30 aus ihrer Ruhelage im Bereich des Bodens 19 der Zähne 15 gegen die Kante 18 des betreffenden Zahnes 15 hin. Dabei gerät die jeweilige Nadel 21 an einer bestimmten Stelle der langsam ansteigenden Zahnflanke 16 mit der Innenwand 12 der Presshülse 11 in Kontakt, wo sie zwischen der Innenwand 12 der Presshülse 11 und der genannten Zahnflanke 16 geklemmt wird (Fig. 4 und 6). Dadurch entsteht ein Schluss bzw. Reibschluss zwischen der Antriebseinrichtung 50 und der Nabenhülse 1, welcher eine Kraftübertragung vom Gewindekopf 6 zum Rad ermöglicht.

Sobald die Drehzahl der Antriebseinrichtung 50 kleiner wird als die Drehzahl der Nabenhülse 1, verstellt sich die Antriebseinrichtung 50 gegenüber der Nabenhülse 1 in Richtung P2 zurück (Fig. 5), sodass die genannte Klemmung der Nadeln 21 zwischen den Flächen 12 und 16 aufgehoben wird. Die Nadeln 21 bewegen sich danach entlang der abfallenden Flanke 16 der Zähne 15 bis in den Bodenbereich 19 zwischen zwei Zähnen 15 zurück. Dabei wird der Schluss zwischen der Antriebseinrichtung 50 und der Nabenhülse 1 aufgehoben. Der Pfeil P3 in Fig. 5 und 6 zeigt die Drehrichtung der Nabenhülse 1 und somit auch des Rades während der Fahrt.

In ihrer Ruhestellung liegen die Nadeln 21 im Bodenbereich 19 der Zähne 15 und sie befinden sich dabei in einem Abstand A3 (Fig. 5) von der Innenfläche 12 der Presshülse 11. Wegen diesem Abstand A3 kann es vorkommen, dass eine kurze Zeitspanne verfliesst, bis die Nadeln 21 aus ihrer Ruhestellung im Bodenbereich 19 der Zähne 15 mit der Innenfläche 12 der Presshülse 11 in Eingriff gelangen und dadurch den Schluss zwischen der Antriebseinrichtung 50 und der Nabenhülse 1 herstellen. Diese Zeitspanne kann durch bestimmte Massnahmen verkürzt werden. Als erste dieser Massnahmen kann der Verlauf der langsam ansteigenden Flanke 16 der Zähne 15, welche den Übergang der Nadeln 21 aus ihrer passiven Stellung im Bodenbereich 19 in ihre aktive Stellung mit dem Eingriff mit der Innenfläche 12 der Presshülse 11 steuert, nicht linear, d.h. insbesondere progressiv ausgestaltet werden, sodass die gewünschte Klemmung früher erfolgt als beim linearen Anstieg der Flanke 16 des Zahnes 15.

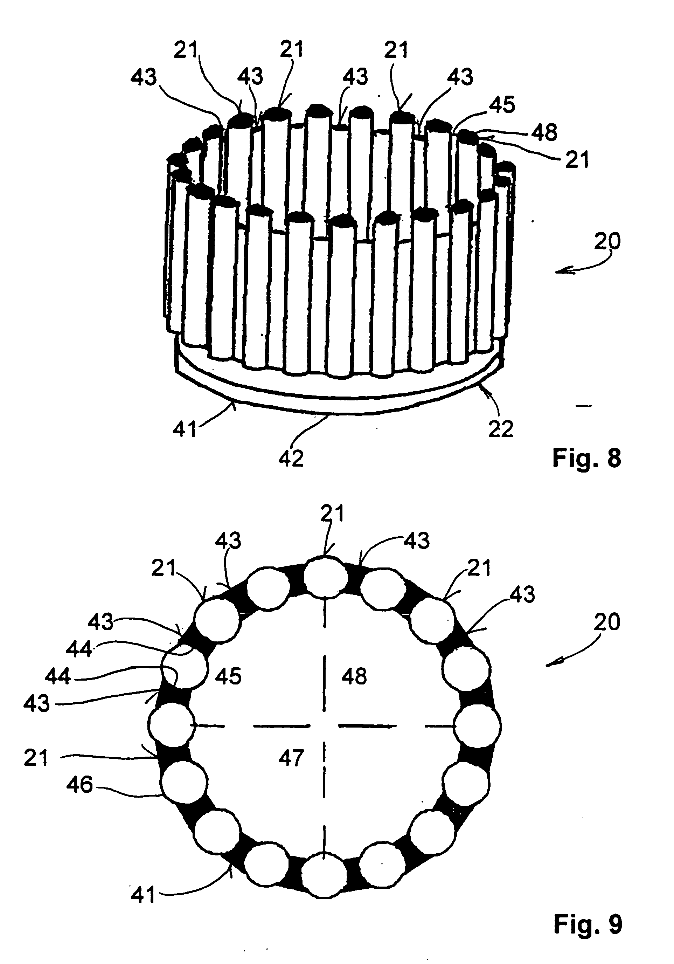

Eine weitere diesbezügliche Massnahme ist in Fig. 7 bis 9 dargestellt. Fig. 7 zeigt vergrössert einen Ausschnitt aus Fig. 1, welcher eine weitere Ausführungsmöglichkeit der Freilaufvorrichtung gemäss Fig. 2 in einem vertikalen Schnitt darstellt. Fig. 8 zeigt perspektivisch die Kupplungsvorrichtung 20 der Freilaufvorrichtung gemäss Fig. 7. Fig. 9 zeigt in einer Draufsicht die Kupplungsvorrichtung 20 aus Fig. 8.

In jener Endpartie der Presshülse 11, welche vom Gewindekopf 6 abgewandt liegt, ist ein umlaufender Absatz 33 (Fig. 3 und 7) in der Innenwand 12 der Presshülse 11 ausgeführt. Im dargestellten Fall ist der Durchmesser dieses zweiten umlaufenden Absatzes 33 in der Presshülse 11 kleiner als der Durchmesser des ersten umlaufenden Absatzes 23. Am im Inneren des zweiten umlaufenden Absatzes 33 liegenden Ende dieses Absatzes 33 bildet die ringförmige Stirnfläche 34 desselben eine der Seitenflächen einer umlaufenden Schulter 35.

Der Käfig 22 der Kupplungsvorrichtung 20 weist einen Grundkörper 41 auf, welcher einen ringförmigen Abschnitt 42 besitzt. Von einer Seite dieses Ringabschnittes 42 stehen Finger 43 ab, und zwar praktisch senkrecht zur Hauptebene des Ringabschnittes 42. Diese Finger 43 sind entlang dem gesamten Ring 43 verteilt. Im dargestellten Fall sind die Abstände zwischen den benachbarten Fingern 43 gleich gross. Zwischen zwei benachbarten Fingern 43 ist jeweils eine der Nadeln bzw. Nadeln 21 angeordnet.

Damit die Nadeln 21 während dem Betrieb der Nabe drehen und zwischen den zugehörigen Fingern 43 dennoch bleiben können, weisen die einander zugewandten Seitenflächen der Finger 43 Ausnehmungen 44 auf. Die jeweilige Ausnehmung 44 hat einen Querschnitt in Form eines Kreisabschnittes. Der Durchmesser des betreffenden Kreises entspricht dem Durchmesser einer Nadel 21. Der Zentriwinkel des Kreisabschnittes ist kleiner als 180 Grad, sodass die Dicke des Fingers 43, gemessen in radialer Richtung des Käfigs 22, kleiner ist als der Durchmesser einer der Nadeln 21. Der Zentriwinkel der Ausnehmungen 44 ist so gewählt, dass zu den beiden Seiten der Dicke der Finger 43 jeweils ein Abschnitt 46 bzw. 47 des Umfanges der Nadel 21 frei steht.

Die jeweilige Ausnehmung 44 erstreckt sich von der freien Endpartie 45 des Fingers 43 bis zum Ringabschnitt 42 des Käfigs 22. Die jeweilige Nadel 21 liegt in den einander gegenüberliegenden Ausnehmungen 44 zweier benachbarten Finger 43 des Käfigs 22, wobei die Nadel 21 einerends auf dem Ringabschnitt 42 des Käfigs 22 aufliegt, Die Länge der Finger 43 ist kleiner als die Länge der Nadeln 21. Infolge dessen liegt der gegenüberliegende Endabschnitt 48 der Nadel 21 ausserhalb des Käfigs 22. Eine solche Kupplungsvorrichtung 20 ist in den zweiten umlaufenden Absatz 33 in der Presshülse 11 so eingesetzt, dass die freien Endpartien 48 der Nadeln 21 an der ringförmigen Seitenfläche 34 der umlaufenden Schulter 35 in der Presshülse 11 aufliegen können.

Auf der zweiten Aufnahmehülse 27 der Freilaufvorrichtung 10 sitzt eine Schraubenfeder 24, welche zwischen der Kupplungsvorrichtung 20 und dem zweiten Antriebslager 28 angeordnet ist. Diese Schraubenfeder 24 ist eine Druckfeder, wobei sich diese Feder 24 einerseits am zweiten Antriebslager 28 und andererseits an der Aussenfläche 49 des Ringabschnittes 42 des Nadelnkäfigs 22 abstützt. Der Durchmesser dieser Druckfeder 24 ist kleiner als der innere Durchmesser des zweiten umlaufenden Absatzes 33 in der Presshülse 11. Der Durchmesser dieser Druckfeder 24 entspricht dem mittleren Durchmesser der Aussenfläche 49 des Ringabschnittes 42 des Nadelnkäfigs 22. Die Schraubenfeder 24 übt einen nicht grossen Druck auf den Nadelnkäfig 22 aus, sodass die Stirnflächen der Endabschnitte 48 der Nadeln 21 mit dieser minimalen Kraft gegen die umlaufende Schulter 35 in der Presshülse 11 angedrückt werden.

Wenn der Fahrradbenützer in die Pedale tritt, dann dreht die über den Gewindekopf 6 angetriebene Steuerhülse 7 bzw. 8 schneller als die mit der Nabenhülse 1 fest verbundene Presshülse 11. Die Druckfeder 24 drückt die freien Enden 48 der Nadeln 21 gegen die mit der Presshülse 11 langsamer drehende umlaufende Schulter 35 an. Da diese Schulter 35 langsamer dreht als die Steuerhülse 7 bzw. 8, werden die Nadeln 21 über ihre Endpartien 48 durch die umlaufende Schulter 35 im Spalt 30 gegenüber der Steuerhülse 7 bzw. 8 gebremst. So gelangen die Nadeln 21 schneller in die engste Stelle des-Spaltes 30 als wenn es keinen seitlichen Druck gäbe. An dieser engsten Stelle des Spaltes 30 verursachen die Nadeln 21 eine Kupplung zwischen der angetriebenen Steuerhülse 7 bzw. 8 und der Nabenhülse 1. Hierbei liegen die innenliegenden freistehenden Längsabschnitte 47 der Nadeln 21 auf der Steuerhülse 7 bzw. 8 auf. Die aussenliegenden freistehenden Längsabschnitte 46 der Nadeln 21 liegen auf der Innenfläche 12 der Steuerhülse 11 auf. Je intensiver man in die Pedale tritt, um so grösser ist der Unterschied zwischen der Geschwindigkeit der Steuerhülse 7 bzw. 8 und jener der Presshülse 11 und um so schnellen kommt die Kupplung zwischen diesen durch die Kupplungsvorrichtung 20 zustande.

Damit sich die Freilaufvorrichtung 10 möglichst bequem handhaben lässt, ist der Durchmesser eines Kreises, welcher über die Kanten 18 der Zähne 25 gelegt wird, kleiner als der Durchmesser der ersten Aufnahmehülse 25. Ferner ist es zweckmässig, wenn der Durchmesser der zweiten Aufnahmenabe 27 kleiner ist als der Kreise, welcher über die Kanten 18 der Zähne 25 gelegt wird.

Ein entscheidender Vorteil dieser Freilaufnabe gegenüber der Freilaufnabe gemäss dem Stand der Technik besteht darin, dass es keine Federn neben der jeweiligen Nadel 21 in den Ausnehmungen des Käfigs gibt. An den Stellen, wo sich früher die Federn befanden, können weitere Nadeln 21 bei der vorliegenden Freilaufnabe vorhanden sein, was die Belastbarkeit einer solchen Freilaufvorrichtung und somit auch der gesamten Freilaufnabe erhöht. Diese Belastung kann zumindest zweimal so gross wie die der vorbekannten Freilaufnabe. Auch die Lebensdauer der erfindungsgemässen Freilaufnabe ist grösser als bei der vorbekannten Freilaufnabe. Dies unter anderem auch deswegen, weil die Nadeln 21, wenn sie ausser Betrieb sind, d.h. wenn sie sich in ihrer passiven Stellung im Bereich des Zahnbodens 19 der Steuerhülse 7 bzw. 8 befinden, nicht angetrieben werden und somit nicht drehen müssen (Fig. 5).

## Patentansprüche

1. Freilaufnabe, insbesondere für ein Fahrrad, mit einer Nabenhülse (1), an welcher Speichen eines Rades einerends anschliessbar sind und in welcher eine Hülse (11) eingepresst ist, mit einer Antriebseinrichtung (50), welche einen hülsenförmigen Gewindekopf (6) für die Aufnahme eines Zahnkranzes besitzt, und mit einer Köpptungsgtieder aufweisenden Freilaufvorrichtung (10), welche der Nabenhülse (1) sowie der Antriebseinrichtung (50) zugeordnet ist und einen Steuerabschnitt (7;8) in Form einer Steuerhülse aufweist, wobei die Freilaufvorrichtung (10) so ausgeführt ist, dass die Koppiungsglieder nur während der Dauer der gewünschten antriebsmässigen Verbindung zwischen der Nabenhülse (1) und Antriebseinrichtung (50) antreibbar sind, **dadurch gekennzeichnet, dass** die Kopplungsglieder als Nadeln (21) ausgeführt sind, dass sich diese Nadeln (21) zwischen der Presshülse (11) und dem Steuerabschnitt (7;8) befinden, dass eine Aufnahmehülse (25) zwischen dem hülsenförmigen Gewindekopf (6) und der Steuerhülse (7 bzw. 8) zwischengeschaltet ist, dass ein umlaufender Absatz (23) in jenem Endbereich der Innenwand der Presshülse (11) ausgeführt ist, welcher dem Gewindekopf (6) zugewandt ist, dass ein erstes Antriebs- bzw. Wälzlager (26) auf der Aufnahmehülse (25) aufgesteckt ist und im umlaufenden Absatz (23) in der Presshülse (11) angeordnet ist, dass eine weitere Hülse (27) zur Aufnahme eines zweiten Antriebslagers (28) am vom Gewindekopf (6) abgewandten Ende der Steuerhülse (7 bzw. 8) angeschlossen ist, dass dieses zweite Antriebs- bzw. Wälzlager (28) in der Nabenhülse (1) eingesetzt ist und dass die Nadeln (21) zwischen den Antriebs- bzw. Wälzlagern (26,28) angeordnet sind.

2. Freilaufnabe nach Patentanspruch 1, **dadurch gekennzeichnet, dass** der Gewindekopf (6) mit dem Steuerabschnitt (7) ein Stück bildet oder dass der Steuerabschnitt (8) eine gesonderte Hülse darstellt, welche mit dem hülsenförmigen Gewindekopf (6) in Verbindung bzw. in Eingriff gebracht werden kann.

3. Freilaufnabe nach Patentanspruch 1, **dadurch gekennzeichnet, dass** in jener Endpartie der Presshülse (11), welche vom Gewindekopf (6) abgewandt liegt, ein umlaufender Absatz (33) in der Innenwand (12) der Presshülse (11) ausgeführt ist, dass sich die Nadeln (21) in diesem umlaufenden Absatz (33) in der Presshülse (11) befinden und dass eine umlaufende Schulter (35) im Bereich des inneren Endes dieses zweiten umlaufenden Absatzes (33) der Innenwand (12) der Presshülse (11) absteht.

4. Freilaufnabe nach Patentanspruch 3, **dadurch gekennzeichnet, dass** ein Käfig (22) für die Nadeln (21) vorgesehen ist, dass dieser Käfig (22) einen Grundkörper (41) aufweist, welcher einen ringförmigen Abschnitt (42) umfasst, dass der Grundkörper (41) des Käfigs (22) ferner Finger (43) umfasst, welche von einer der Seiten des Ringabschnittes (42) abstehen und dass eine der Nadeln (21) zwischen zwei benachbarten Fingern (43) angeordnet ist

5. Freilaufnabe nach Patentanspruch 4, **dadurch gekennzeichnet, dass** die Länge der Finger (43) kleiner ist als die Länge der Nadeln (21), sodass die Nadeln (21) einen Endabschnitt (48) aufweisen, welcher ausserhalb des Käfigs (22) und in der Verlängerung der Finger (43) liegt und dass diese freie Endpartien (48) der Nadeln (21) an der ringförmigen Stirnfläche (34) der umlaufenden Schulter (35) in der Presshülse (11) aufliegen.

6. Freilaufnabe nach Patentanspruch 5, **dadurch gekennzeichnet, dass** eine Schraubenfeder (24) auf der zweiten Aufnahmehülse (27) der Freilaufvorrichtung (10) so sitzt, dass sie einen gegen die umlaufende Schulter (35) an der Presshülse (11) gerichteten Druck auf den Käfig (22) mit den Nadeln (21) ausüben kann, sodass die Endabschnitte (48) der Nadeln (21) mit einer Kraft gegen die Stirnfläche (34) der umlaufenden Schulter (35) andrückbar sind.

7. Freilaufnabe nach Patentanspruch 6, **dadurch gekennzeichnet, dass** die Schraubenfeder (24) auf der zweiten Aufnahmehülse (27) zwischen dem zweiten Antriebslager (28) und dem Nadelnkäfig (22) angeordnet ist, wobei sich diese Feder (24) einerseits am zweiten Antriebslager (28) und andererseits an der Aussenfläche (49) des Ringabschnittes (42) des Nadelnkäfigs (22) abstützt, dass der Durchmesser dieser Druckfeder (24) kleiner ist als der innere Durchmesser des zweiten umlaufenden Absatzes (33) in der Presshülse (11) und dass der Durchmesser dieser Druckfeder (24) dem mittleren Durchmesser der Aussenfläche (49) des Ringabschnittes (42) des Nadelnkäfigs (22) entspricht.

8. Freilaufnabe nach Patentanspruch 4, **dadurch gekennzeichnet, dass** die einander zugewandten Seitenflächen der Finger (43) Ausnehmungen (44) aufweisen, dass die jeweilige Ausnehmung (44) einen Querschnitt in Form eines Kreisabschnittes hat, dass sich die jeweilige Ausnehmung (44) von der freien Endpartie (45) des Fingers (43) bis zum Ringabschnitt (42) des Käfigs (22) erstreckt, dass der Durchmesser des betreffenden Kreises bei der Ausnehmung (44) dem Durchmesser einer Nadel (21) entspricht, dass der Zentriwinkel des Kreisabschnittes (44) kleiner ist als 180 Grad, sodass je ein länglicher Abschnitt (46,47) des Umfanges der Nadel (21) aus der Kontur des Käfigs (22) zu den beiden Seiten dieses Käfigs (22) hervorsteht, und dass die Nadeln (21) über ihre länglichen Randabschnitte (46,47) auf der Steuerhülse (7,8) und auf der Presshülse (11) aufliegen können.

9. Freilaufnabe nach Patentanspruch 1, **dadurch gekennzeichnet, dass** die Innenwand (12) der Presshülse (11) glatt ist und die Form des Mantels eines Zylinders hat, dass auf der im wesentlichen zylinderförmigen Aussenwand (9) des Steuerabschnittes (7 bzw. 8) Zähne (15) ausgeführt sind, welche von der zylinderförmigen Oberfläche (9) der Steuerhülse (7) im wesentlichen radial abstehen, dass sich der jeweilige Zahn (15) in seiner Längsrichtung parallel zur Längsachse C der Nabe erstreckt, dass solche Zähne (15) über den gesamten Umfang der Aussenfläche (9) der Steuerhülse (7 bzw. 8) verteilt sind und dass je eine der Nadeln (21) einem dieser Zähne (15) zugeordnet ist.

10. Freilaufnabe nach Patentanspruch 9, **dadurch gekennzeichnet, dass** der jeweilige Zahn (15) im Querschnitt ein Sägezahn mit einer langsam ansteigenden Flanke (16) und mit einer steilen Flanke (17) ist und dass die langsam ansteigende Zahnflanke (16) einen linearen bzw. geradlinigen oder einen progressiven Verlauf aufweist.

11. Freilaufnabe nach Patentanspruch 1, **dadurch gekennzeichnet, dass** die Achse (3) durch die Nabenhülse (1) hindurchgeht, dass die Nabenhülse (1) mittels eines Wälzlagers (4) auf der Achse (3) drehbar gelagert ist, dass sich zwischen dem Gewindekopf (6) und der Achse (3) ein weiteres Wälzlager (51) befindet, welches zur Lagerung des hülsenförmigen Gewindekopfes (6) auf der Achse (3) bestimmt ist.

## Claims

1. Free-wheeling hub, in particular for a bicycle, having a hub sleeve (1) at which spokes of a wheel may be secured with one of their ends and into which a sleeve (11) is force-fitted, having a drive means (50) including a sleeve-shaped thread head (6) for receiving a sprocket, and having a free-wheeling device (10) comprising coupling members and being associated to both the hub sleeve (1) and the drive means (50), and comprising a control portion (7;8) shaped as a control sleeve, wherein the free-wheeling device (10) is configured such that the coupling members can be driven only during the period of a desired drive-type connection between the hub sleeve (1) and the drive means (50), **characterized in that** the coupling members are configured as needles (21), that these needles (21) are located between the force-fitted sleeve (11) and the control portion (7;8), that a receiving sleeve (25) is interposed between the sleeve-shaped thread head (6) and the control sleeve (7 and 8, resp.), that a circumferential step (23) is provided in an end region of the inner wall of the force-fitted sleeve (11), which end region faces the thread head (6), that a first drive bearing or roller bearing (26) is plugged onto the receiving sleeve (25) and arranged in the circumferential step (23) in the force-fitted sleeve (11), that a further sleeve (27) for receiving a second drive bearing (28) is secured at the end of the control sleeve (7 and 8, resp.) which end faces away from the thread head (6), that the second drive bearing or roller bearing (28) is fitted into the hub sleeve (1), and that the needles (21) are arranged between the drive bearings or roller bearings (26,28).

2. Free-wheeling hub according to claim 1, **characterized in that** the thread head (6) is integral with the control portion (7) or that the control portion (8) constitutes a separate sleeve which can be connected to or engaged with the sleeve-shaped thread head (6).

3. Free-wheeling hub according to claim 1, **characterized in that** a circumferential step (33) is provided in the inner wall (12) of the force-fitted sleeve (11) in the end region of the force-fitted sleeve (11) which end region faces away from the thread head (6), that the needles (21) are located in this circumferential step (33) in this force-fitted sleeve (11), and that a circumferential shoulder (35) protrudes from the region of the inner end of this second circumferential step (33) of the inner wall (12) of the force-fitted sleeve (11).

4. Free-wheeling hub according to claim 3, **characterized in that** a cage (22) for the needles (21) is provided, that the cage (22) comprises a base body (41) which includes an annular portion (42), that the base body (41) of the cage (22) further includes fingers (43) which protrude from one of the sides of the annular portion (42), and that one of the needles (21) is arranged between two adjacent fingers (43).

5. Free-wheeling hub according to claim 4, **characterized in that** the length of the fingers (43) is smaller than the length of the needles (21) such that the needles (21) comprise an end portion (48) located outside the cage (22) and in the prolongation of the fingers (43), and that these free end portions (48) of the needles (21) rest on the annular face (34) of the circumferential shoulder (35) in the force-fitted sleeve (11).

6. Free-wheeling hub according to claim 5, **characterized in that** a helical spring (24) is seated on the second receiving sleeve (27) of the free-wheeling device (10) in such a fashion that it can exert a pressure directed towards the circumferential shoulder (35) at the force-fitted sleeve (11) and onto the cage (22) having the needles (21) such that the end portions (48) of the needles (21) can be forcibly pressed against the face (34) of the circumferential shoulder.

7. Free-wheeling hub according to claim 6, **characterized in that** the helical spring (24) is positioned on the second receiving sleeve (27) between the second drive bearing (28) and the needle cage (22), wherein the spring (24) rests on the second drive bearing (28) on the one hand and on the outer surface (49) of the annular portion (42) of the needle cage (22) on the other hand, that the diameter of this pressure spring (24) is smaller than the inner diameter of the second circumferential step (33) in the force-fitted sleeve (11), and that the diameter of this pressure spring (24) corresponds to the average diameter of the outer surface (49) of the annular portion (42) of the needle cage (22).

8. Free-wheeling hub according to claim 4, **characterized in that** the mutually facing lateral surfaces of the fingers (43) comprise recesses (44), that each recess (44) has a cross section in form of a circular section, that each recess (44) extends from the free end portion (45) of the finger (43) to the annular portion (42) of the cage (22), that the diameter of the respective circle at the recess (44) corresponds to the diameter of a needle (21), that the center angle of the circular section (44) is less than 180 degrees such that an oblong portion (46,47) of the perimeter of the needle (21) protrudes from the contour of the cage (22) towards both sides of this cage (22), and that the needles (21), via their oblong perimeter portions (46,47), can rest on the control sleeve (7,8) and on the force-fitted sleeve (11).

9. Free-wheeling hub according to claim 1, **characterized in that** the inner wall (12) of the force-fitted sleeve (11) is smooth and is shaped as a generated surface of a cylinder, that teeth (15) are formed on the substantially cylindrical outer wall (9) of the control section (7 and 8, resp.), which teeth protrude substantially radially from the cylindrical surface (9) of the control sleeve (7), that each tooth (15) extends in its longitudinal direction in parallel to the longitudinal axis C of the hub, that such teeth (15) are distributed throughout the entire perimeter of the outer surface (9) of the control sleeve (7 and 8, resp.), and that each single needle (21) is associated to one of these teeth (15).

10. Free-wheeling hub according to claim 9, **characterized in that** each single tooth (15) is a sawtooth having a slowly rising edge (16) and a steep edge (17), and that the slowly rising tooth edge (16) comprises a linear or straight line or a progressive course.

11. Free-wheeling hub according to claim 1, **characterized in that** the axle (3) passes through the hub sleeve (1), that the hub sleeve (1) is rotatably mounted on the axle (3) by a roller bearing (4), that a further roller bearing (51) is located between the thread head (6) and the axle (3), said roller bearing being intended for mounting the shell-shaped thread head (6) on the axle (3).

## Revendications

1. Moyeu à roue libre, notamment pour bicyclette, comportant une douille de moyeu (1) à laquelle des rayons d'une roue peuvent être attachés avec l'une de leurs extrémités et dans laquelle une douille (11) est pressée, comportant un moyen d'entraînement (50) qui possède une tête de filet (6) en forme de douille pour recevoir une couronne dentée, et comportant un dispositif à roue libre (10) comprenant des éléments de couplage et associé à la douille de moyeu (1 ) ainsi qu'au moyen d'entraînement (50), et comportant une partie de commande (7;8) en forme de douille de commande, dans lequel le dispositif à roue libre (10) est configuré de telle manière que les éléments de couplage ne peuvent être entraînés que lors de la période désirée d'une connexion du type à entraînement entre la douille de moyeu (1) et le moyen d'entraînement (50), **caractérisé en ce que** les éléments de couplage sont configurés en tant qu'aiguilles (21), **en ce que** ces aiguilles (21) sont positionnées entre la douille pressée (11) et la partie de commande (7,8), **en ce qu'**une douille de réception (25) est interposée entre la tête de filet (6) en forme de douille et la douille de commande (7 resp. 8), **en ce qu'**un gradin circonférentiel (23) est pourvu au niveau d'une région d'extrémité de la paroi intérieure de la douille pressée (11), ladite region d'extrémité se trouvant en face de la tête de filet (6), **en ce qu'**un premier palier d'entraînement ou palier à rouleaux (26) est monté sur la douille de réception (25) et agencé dans le gradin circonférentiel (23) dans la douille pressée (11), **en ce qu'**une autre douille (27) pour recevoir un second palier d'entraînement (28) est attachée à l'extrémité de la douille de commande (7 resp. 8), ladite extrémité étant détournée de la tête de filet (6), **en ce que** le second palier d'entraînement ou palier à rouleaux (28) est emmanché dans la douille de moyeu (1), et **en ce que** les aiguilles (21) sont agencées entre les paliers d'entraînement ou paliers à rouleaux (26,28).

2. Moyeu à roue libre selon la revendication 1, **caractérisé en ce que** la tête de filet (6) est solidaire de la partie de commande (7) ou **en ce que** la partie de commande (8) constitue une douille séparée susceptible d'être raccordée à ou de venir en prise avec la tête de filet (6) en forme de douille.

3. Moyeu à roue libre selon la revendication 1, **caractérisé en ce qu'**un gradin circonférentiel (33) est pourvu dans la paroi intérieure (12) de la douille pressé (11) dans la région d'extrémité de la douille pressée (11), ladite région d'extrémité étant détournée de la tête de filet (6), **en ce que** les aiguilles (21) sont positionnées dans ce gradin circonférentiel (33) dans cette douille pressée (11), et **en ce qu'**un épaulement circonférentiel (35) fait saillie de la région de l'extrémité intérieure de ce second gradin circonférentiel (33) de la paroi intérieure (12) de la douille pressée (11).

4. Moyeu à roue libre selon la revendication 3, **caractérisé en ce qu'**une cage (22) pour les aiguilles (21) est pourvue, **en ce que** la cage (22) comprend un corps de base (41) qui comporte une partie annulaire (42), **en ce que** le corps de base (41) de la cage (22) comporte en outre des doigts (43) qui font saillie de l'un des côtés de la partie annulaire (42), et **en ce que** l'une des aiguilles (21) est positionnée entre deux doigts adjacents (43).

5. Moyeu à roue libre selon la revendication 4, **caractérisé en ce que** la longueur des doigts (43) est inférieure à la longueur des aiguilles (21) de manière à ce que les aiguilles (21) comprennent une partie d'extrémité (48) se trouvant à l'extérieur de la cage (22) et dans la prolongation des doigts (43), et **en ce que** ces parties d'extrémité libres (48) des aiguilles (21) reposent sur la face annulaire (34) de l'épaulement circonférentiel (35) dans la douille pressée (11).

6. Moyeu à roue libre selon la revendication 5, **caractérisé en ce qu'**un ressort hélicoïdal (24) prend son appui sur la seconde douille de réception (27) du dispositif à roue libre (10) de manière à ce qu'il puisse exercer une pression dirigée vers l'épaulement circonférentiel (35) au niveau de la douille pressée (11) et agissant sur la cage (22) comportant les aiguilles de façon à ce que les parties d'extrémité (48) des aiguilles (21) puissent être pressées contre la face (34) de l'épaulement circonférentiel.

7. Moyeu à roue libre selon la revendication 6, **caractérisé en ce que** le ressort hélicoïdal (24) est positionné sur la seconde douille de réception (27) entre le second palier d'entraînement (28) et la cage d'aiguilles (22), ledit ressort (24) reposant sur le second palier d'entraînement (28) d'une part et sur la surface extérieure (49) de la partie annulaire (42) de la cage d'aiguilles (22) d'autre part, **en ce que** le diamètre de ce ressort à pression (24) est inférieur au diamètre intérieur du second gradin circonférentiel (33) dans la douille pressée (11), et **en ce que** le diamètre de ce ressort de pression (24) correspond au diamètre moyen de la surface extérieure (49) de la partie annulaire (42) de la cage d'aiguilles (22).

8. Moyeu à roue libre selon la revendication 4, **caractérisé en ce que** les surfaces latérales, orientées les unes vers les autres, des doigts (43) comprennent des évidements (44), **en ce que** chaque évidement (44) a une section transversale en forme de section circulaire, **en ce que** chaque évidement (44) s'étend à partir de la partie à extrémité libre (45) du doigt (43) vers la partie annulaire (42) de la cage (22), **en ce que** le diamètre du cercle correspondant au niveau de l'évidement (44) correspond au diamètre d'une aiguille (21), **en ce que** l'angle au centre de la section circulaire (44) est inférieur à 180 degrés de manière à ce qu'une partie oblongue (46,47) du périmètre de l'aiguille (21) fasse saillie du contour de la cage (22) vers les deux côtés de cette cage (22), et **en ce que** les aiguilles (21), via leurs parties oblongues de périmètre (46,47), sont susceptibles de reposer sur la douille de commande (7,8) et sur la douille pressée (11).

9. Moyeu à roue libre selon la revendication 1, **caractérisé en ce que** la paroi intérieure (12) de la douille pressée (11) est lisse et se présente sous la forme d'une surface générée de cylindre, **en ce que** des dents (15) sont formées sur la paroi extérieure, sensiblement cylindrique (9) de la partie de commande (7 et 8, resp.), lesdites dents faisant saillie sensiblement radialement de la surface cylindrique (9) de la douille de commande (7), **en ce que** chaque dent (15) s'étend dans sa direction longitudinale en parallèle à l'axe longitudinal C du moyeu, **en ce que** de telles dents (15) sont distribuées sur la totalité du périmètre de la surface extérieure (9) de la douille de commande (7 et 8, resp.), et **en ce que** chacune des aiguilles (21) est associée à l'une de ces dents (15).

10. Moyeu à roue libre selon la revendication 9, **caractérisé en ce que** chacune des dents (15) est une dent de scie comportant un flanc lentement ascendant (16) et un flanc escarpé (17), et **en ce que** le flanc de scie lentement ascendant (16) comprend un cours (une course, une progression) linéaire ou en ligne droite ou progressif.

11. Moyeu à roue libre selon la revendication 1, **caractérisé en ce que** l'essieu (3) passe au travers de la douille de moyeu (1), **en ce que** la douille de moyeu (1) est montée en rotation sur l'essieu (3) par un palier à rouleaux (4), **en ce qu'**un autre palier à rouleaux (51) est positionné entre la tête de filet (6) et l'essieu (3), ledit palier à rouleaux étant destine au montage de la tête de filet (6), en forme de douille, sur l'essieu (3).
